# EUROPEAN PATENT SPECIFICATION

(11) **EP 2 230 000 B1**
(45) Date of publication and mention of the grant of the patent: **19.06.2013**
(21) Application number: 09179658.1
(22) Date of filing: 17.12.2009
(51) Int. Cl.: B01D 53/62, B01D 53/96

(54) **Flue gas treatment system and method using ammonia solution**
Vorrichtung und Verfahren zur Abgasbehandlung mit Ammoniaklösung
Appareil et procédé de traitement de gaz d'échappement à l'aide de solution d'ammoniaque

(30) Priority: 12.03.2009 US 159658 P
(43) Date of publication of application: 22.09.2010
(73) Proprietor: Alstom Technology Ltd, 5400 Baden (CH)
(72) Inventor: Augustsson, Ola, 352 35 Växjö (SE); Koss, Peter Ulrich, 8702 Zollikon (CH)
(74) Representative: Kånge, Lars Rikard

(56) References cited:
- EP-A2- 0 077 492
- WO-A2-02/089958
- US-A- 3 225 519
- US-A1- 2008 307 968

## Description

### Field of the invention

The proposed invention relates to a system and method for removing carbon dioxide (CO2) from a gas stream by bringing the gas stream into contact with a circulating ionic ammonia solution stream such that carbon dioxide is absorbed in said ionic ammonia solution. More particularly, the proposed invention is directed to a chilled ammonia based process and system for removing CO2 from a gas stream.

### Background

In the combustion of a fuel, such as coal, oil, peat, waste, etc., in a combustion plant, such as those associated with boiler systems for providing steam to a power plant, a hot process gas (or flue gas) is generated. Such a flue gas will often contain, among other things, carbon dioxide (CO2). The negative environmental effects of releasing carbon dioxide to the atmosphere have been widely recognized, and have resulted in the development of processes adapted for removing carbon dioxide from the hot process gas generated in the combustion of the above mentioned fuels. One such system and process previously disclosed is the single-stage Chilled Ammonia based system and process for removal of carbon dioxide (CO2) from a post-combustion flue gas stream.

Known Chilled Ammonia based systems and processes (CAP) provide a relatively low cost means for capturing and removing CO2 from a gas stream, such as, for example, a post combustion flue gas stream. An example of such a system and process has previously been disclosed in the published international patent application WO 2006/022885 titled Ultra Cleaning of Combustion Gas Including the Removal of CO2. In the process described in WO 2006/022885, the absorption of CO2 from a flue gas stream is achieved by contacting a chilled ammonia ionic solution (or slurry) with a flue gas stream containing CO2. The ionic solution containing absorbed CO2 is subsequently regenerated, whereby CO2 is removed from the ionic solution, and the regenerated ionic solution is reused in the CO2 absorption process. Thus, a circulating stream of ionic solution is formed.

A problem in the chilled ammonia process as described in WO 2006/022885, is that water entering the circulating stream of ionic solution, for example as moisture in the incoming flue gas stream, is accumulated in the ionic solution. This accumulated water acts to dilute the ionic solution, thereby reducing the ability of the ionic solution to "capture" CO2 from a flue gas stream.

US 2008/307968 A1 (Kang et al.) discloses an apparatus and method for absorbing and recovering carbon dioxide from flue gas using ammonia water as a absorbent. Besides an absorption column and a regeneration column it is also describes that the apparatus may comprise a "concentration column" configured to receive ammonia water and produce an ammonia enriched gas phase at the top and water at the bottom. The ammonia enriched phase is reintroduced into the absorption column.

US 3 225 519 (Stotler, H) discloses a gas cleaning system intended for use with aqueous acetone. Besides an absorption column and a stripper column it is also described that the apparatus may comprise a "solvent-water fractionator" equipped with a reboiler at the bottom configured to receive aqueous acetone and produce an acetone enriched gas phase at the top and water at the bottom. The acetone enriched phase is reintroduced into the absorption or stripper column.

EP A 0 077 492 (Karwat, H) discloses a gas cleaning method intended for use with aqueous methanol. Besides an absorption column and a regeneration column it is also described that the apparatus may comprise a "methanol-water separation column" equipped with a reboiler at the bottom and configured to receive aqueous methanol and produce a methanol enriched phase at the top and water at the bottom. The methanol enriched phase is reintroduced into the regeneration column.

WO 02/089958 A2 (Thielert, H) discloses a gas cleaning system intended for removal of H₂S and NH₃ using an aqueous NaOH solution. Besides an absorber and a desorber, it is also described that the apparatus may comprise an evaporator configured to concentrate waste water leaving the system.

### Summary of the invention

It is an object of the present invention to reduce or avoid water accumulation in the ionic solution of chilled ammonia based systems and processes for removal of carbon dioxide (CO2) from gas streams.

It is another object of the present invention to reduce or avoid water accumulation in the ionic solution of chilled ammonia based systems with no or low added energy requirement on the system.

The construction and operation of industrial gas purification systems, e.g. for the removal of CO2 from the flue gas produced by the boiler unit of a power plant, are associated with high investment and operational costs. Increasing the number of unit operations in a process is generally undesired, since it is associated with additional investment and operational costs. The aspects described herein are based on the inventive realization that in a chilled ammonia process for removal of CO2 from a flue gas, significant process improvements and operational cost reduction can be achieved by the introduction of an additional unit operation at a relatively low investment cost. Process improvements include reduced chemical consumption reduced waste volume.

According to aspects illustrated herein, there is provided a system for removing carbon dioxide (CO2) according to claim 1.

The ionic ammonia solution (also referred to herein simply as "ionic solution") is typically aqueous and may be composed of, for example, water, ammonia, carbon dioxide and derivatives thereof.

The gas-liquid separating device allows accumulated water to be removed from the circulating stream of ionic ammonia solution while minimizing the loss of ammonia and derivatives thereof from the system.

In an embodiment the gas-liquid separating device comprises a stripper configured to receive a portion of the circulating ionic ammonia solution stream and heat the solution so as to form a gas phase containing the vapor of low boiling point components of the solution, and a liquid phase containing the high boiling point components of the solution. The stripper may for example be configured to be heated by steam or by electric heating means.

The stripper may preferably be small in size compared to the absorber and the regenerator. In an embodiment, the volume flow capacity of the stripper may be in a range of 0.01 to 25% of the volume flow capacity of the absorber or the regenerator. The investment cost of such a small stripper will generally constitute a very low proportion of the total investment cost for the CO2 removal system.

The ionic solution for the gas-liquid separating device may be received from any position along the ionic solution circulation. The ionic solution for the gas-liquid separating device may for example be CO2 lean ionic ammonia solution or CO2 rich ionic ammonia solution.

In an embodiment the gas-liquid separating device is configured to receive CO2 lean ionic ammonia solution from the circulating ionic ammonia solution stream. The gas-liquid separating device may for example be configured to receive CO2 lean ionic ammonia solution from the regenerator. Since the temperature of the lean solution in the regenerator, and when leaving the regenerator via the second liquid conduit, is high, a relatively small amount of heat must be added in the stripper in order to separate the gas phase from the liquid phase. Since the heating requirement is low, heating may be effected, e.g., by electrical means.

In another embodiment the gas-liquid separating device is configured to receive CO2 rich ionic ammonia solution from the circulating ionic ammonia solution stream. The gas-liquid separating device may for example be configured to receive CO2 rich ionic ammonia solution from the CO2 absorber. Since the pressure of the ionic liquid in the CO2 absorber, and leaving the CO2 absorber via the first liquid conduit, is low, generally in a range of 1-2 bar, the heat requirement of the stripper can be provided at relatively low temperature, i.e. above the boiling temperature of water at a pressure of 1-2 bar. Thus, the heating requirement of the stripper may be provided by, e.g., low pressure steam or other low grade heat.

When the ionic solution has been separated in the gas-liquid separating device, the ammonia lean liquid phase, generally comprising water or a low ammonia content aqueous solution, is discarded or recycled elsewhere in the CO2 removal system. The ammonia rich gas phase, generally comprising ammonia, CO2 and residual amounts of water vapor is reintroduced into the circulating ionic solution stream, resulting in an increase of the ammonia concentration in the circulating ionic solution.

The ammonia rich gas phase may preferably be reintroduced into a ionic solution stream wherein the heat used in the stripper for producing the ammonia rich gas phase replaces a portion of the heat requirement in another step of the process, such as the regeneration. Thus the gas-liquid separating device is configured to reintroduce the ammonia rich gas phase into the regenerator or into an ionic solution stream directed towards the regenerator.

In an embodiment the gas-liquid separating device is configured to reintroduce the ammonia rich gas phase into an ionic ammonia solution stream directed towards the regenerator.

In an embodiment the gas-liquid separating device is configured to reintroduce the ammonia rich gas phase into the regenerator.

The regeneration process is generally performed at elevated pressure, such as a pressure of 2-150 bar, preferably 10-30 bar. This pressure is generally created by means of a high pressure pump arranged in connection with the regenerator.

In an embodiment the system comprises a high pressure pump configured to increase the pressure of the ionic ammonia solution in the regenerator to 2-150 bar, preferably 10-30 bar.

In an embodiment, wherein the gas-liquid separating device comprises a stripper the system may further comprise a heat exchanger configured to heat the received portion of the circulating ionic ammonia solution stream using the ammonia lean liquid phase. The introduction of a heat exchanger on the fluid conduit between the circulating ionic solution stream and the gas-liquid separating device configured to heat the received portion of the circulating ionic ammonia solution stream using the ammonia lean liquid phase.

The gas-liquid separating device may advantageously be implemented in a CO2 removal system further comprising a water wash step for removal of residual ammonia from the flue gas which has been treated in the CO2 absorber. Such water wash systems are well known in the prior art.

Thus, in an embodiment the system further comprises:
an ammonia absorber configured to receive a gas stream depleted in CO2 from the CO2 absorber and bring the gas stream into contact with a stream of water or an aqueous solution having a concentration of ammonia of less than 5 % by weight such that ammonia is absorbed in said stream of water or aqueous solution.

In a CO2 removal system further comprising a water wash system, an ammonia lean liquid stream from the gas-liquid separating device may be sent to the water wash system for recycling, and/or an ammonia rich stream produced by the water wash system may be sent to the gas-liquid separating device for recycling in the circulating ionic solution stream.

In an embodiment, wherein the system further comprises an ammonia absorber, the ammonia absorber is configured to receive at least a portion of the ammonia lean liquid phase from the gas-liquid separating device.

According to other aspects illustrated herein, there is provided a method for removing carbon dioxide (CO2) from a gas stream according to claim 12.

Advantages of the method according to the aspects illustrated herein correspond to the advantages set out for the system described above.

In an embodiment the portion of ionic ammonia solution which is withdrawn in step d) is in the range of 0.01-25 % by volume of the total volume of circulating ionic ammonia solution stream.

In an embodiment the ammonia lean liquid phase in step f) comprises an aqueous solution containing less than 5 % by weight of ammonia.

In an embodiment the ionic ammonia solution which is withdrawn in step f) is CO2 rich ionic ammonia solution.

In another embodiment the ionic ammonia solution which is withdrawn in step f) is CO2 lean ionic ammonia solution.

In an embodiment the ammonia rich gas phase in step f) is reintroduced into a stream which is subsequently subjected to heating.

In an embodiment the ammonia lean liquid phase in step f) is removed from the circulating stream of ionic ammonia solution.

In an embodiment step f) is performed in a stripper. The stripper may for example be heated by steam or by electric heating means.

As mentioned above, the aspects described herein are based on the inventive realization that in a chilled ammonia process for removal of CO2 from a flue gas, significant process improvements and operational cost reduction can be achieved by the introduction of an additional unit operation at a relatively low investment cost.

In an embodiment of any one of the above aspects, said method or system for removing CO2 from a gas stream by bringing the gas stream into contact with a circulating ionic ammonia solution such that CO2 is absorbed in said ionic ammonia solution is a chilled ammonia based process or system for removing CO2 from a gas stream.

Further objects, features and advantages of the present invention will be apparent from the description and the claims. The above described and other features are exemplified by the following figures and detailed description.

### Brief description of the drawings

Many aspects of the invention can be better understood with reference to the following drawings. The figures are exemplary embodiments, wherein the like elements are numbered alike.
FIG. 1A (Prior art) is a diagram generally depicting an example of a gas cleaning system.
FIG. 1B (Prior art) is a diagram generally depicting an example of a CO2 removal system.
FIG. 1C (Prior art) is a schematic side view depicting an example of a CO2 absorber.
FIG. 1D (Prior art) is a schematic side view depicting an example of a regenerator.
FIG. 2A is a diagram generally depicting an example of a CO2 removal system comprising a stripper.
FIG. 2B is a schematic side view depicting an example of a stripper.
FIG. 2C is a schematic side view depicting an example of a CO2 removal system comprising a stripper.
FIG. 2D is a schematic side view depicting an example of a CO2 removal system comprising a stripper.
FIG. 3 is a schematic side view depicting an example of a CO2 removal system comprising a stripper.

### Detailed description

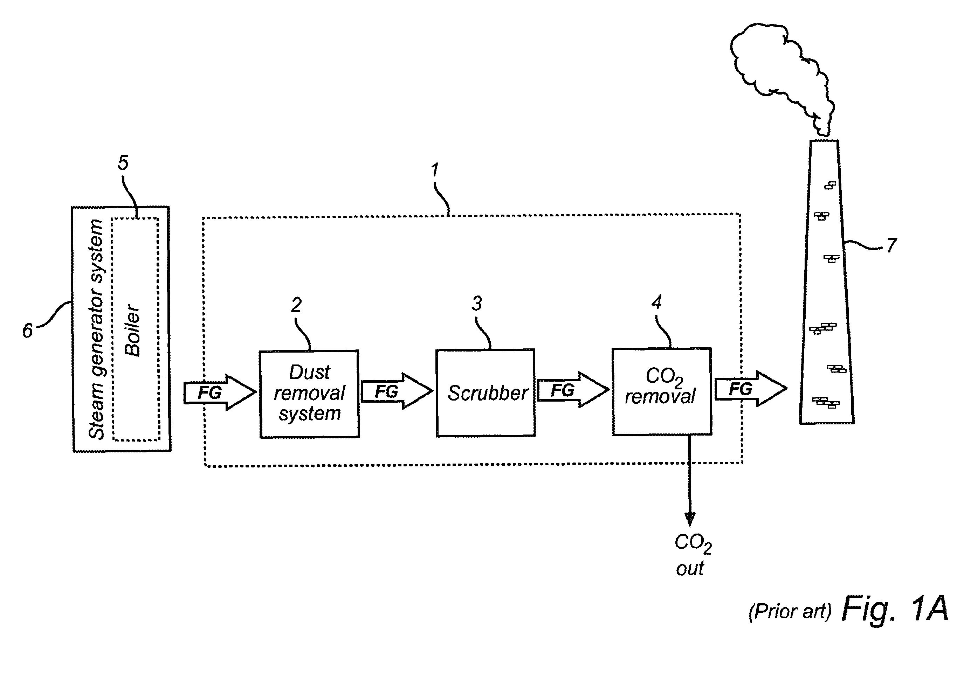

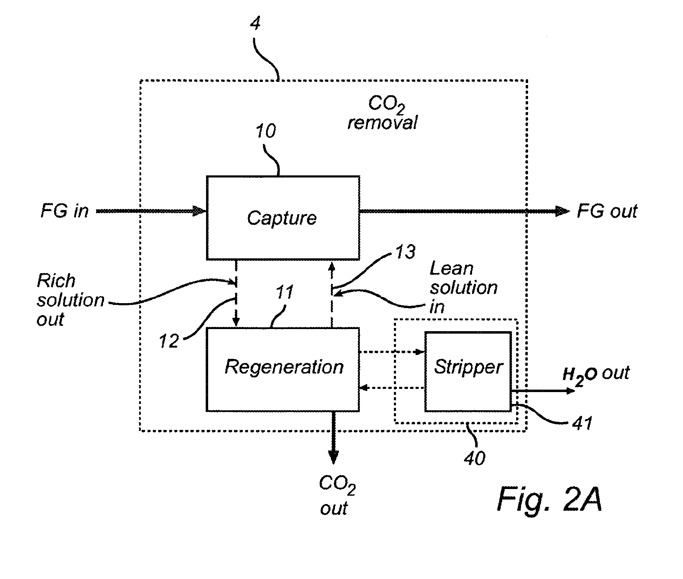

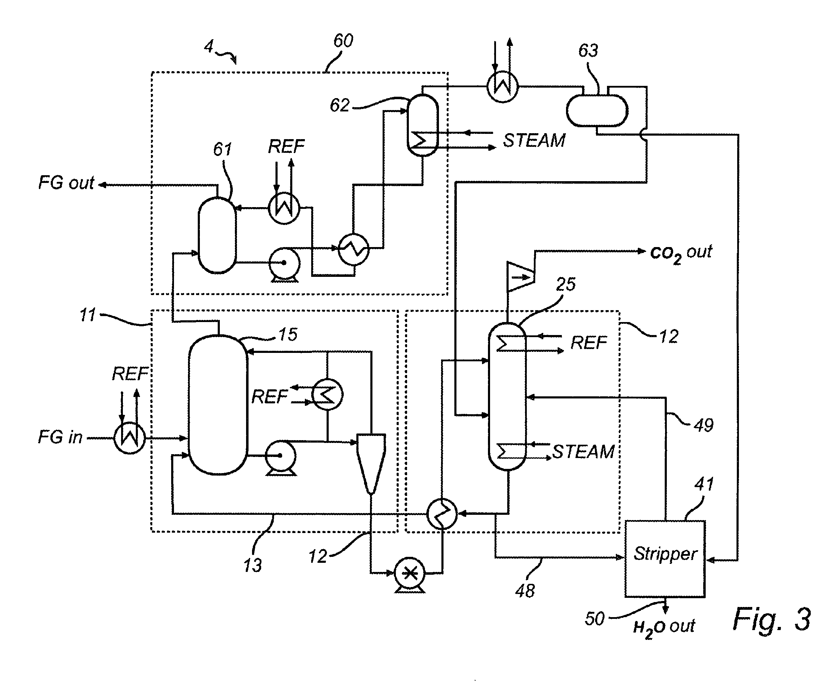

Herein, the invention will be described in detail with reference to the drawings. First, a prior art chilled ammonia system for CO2 removal will be described with reference to FIGS. 1A-1D, thereafter various embodiments of the inventive system will be described with reference to FIGS. 2A-2D and 3.

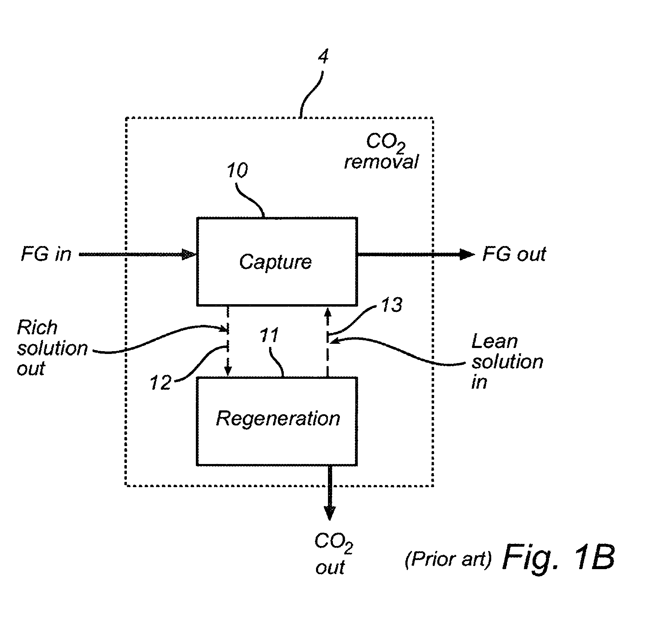

FIG. 1A (Prior art) is a diagram generally depicting an example of a gas cleaning system 1 for cleaning flue gas emitted by the combustion chamber of a boiler system 5 used in a steam generator system 6 of, for example, a power generation plant. The gas cleaning system may comprise a dust removal system 2 and a scrubber system 3 configured for removal of particles and other contaminants from the flue gas. The gas cleaning system also comprises a CO2 removal system 4. The CO2 removal system 4 includes a CO2 capture system 10 that is configured to remove CO2 from the flue gas stream FG before emitting the cleaned flue gas stream to an exhaust stack 7 (or alternatively additional processing). It is also configured to output CO2 removed from the flue gas stream FG. Details of CO2 removal system 4 are generally depicted in FIG. 1B.

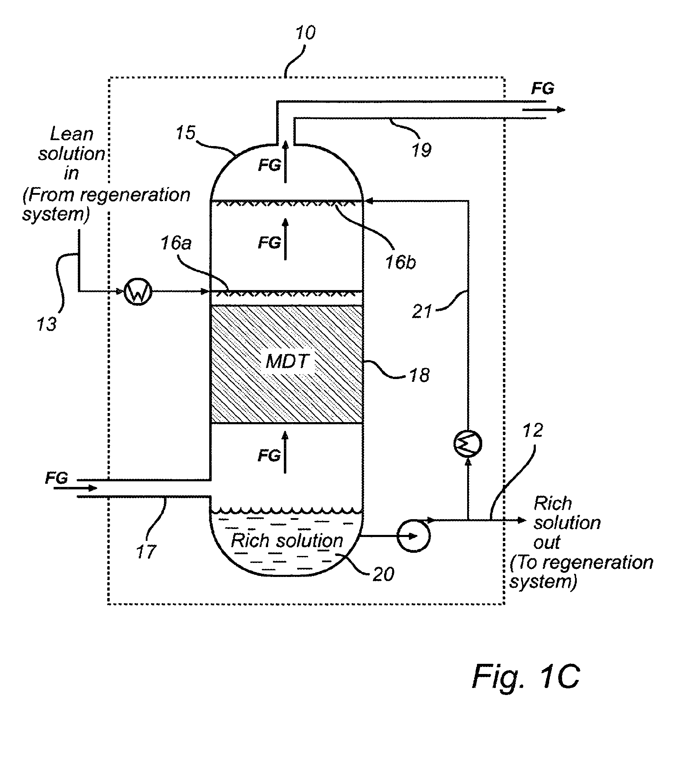

With reference to FIG. 1B, CO2 removal system 4 includes a capture system 10 for capturing and removing CO2 from a flue gas stream FG and a regeneration system 11 for regenerating ionic solution used to remove CO2 from the flue gas stream FG. Details of capture system 10 are generally depicted in FIG. 1C.

With reference to FIG. 1C, a capture system 10 of a CO2 removal system 4 is generally depicted. In this system, the capture system 10 is a chilled ammonia based CO2 capture system. In a chilled ammonia based system/method for CO2 removal, a CO2 absorber is provided in which an absorbent ionic ammonia solution (ionic solution) is contacted with a flue gas stream (FG) containing CO2. The ionic ammonia solution (also referred to herein simply as "ionic solution") is typically aqueous and may be composed of, for example, water, ammonia, carbon dioxide and derivatives thereof. Examples of derivatives of ammonia and carbon dioxide that may be present in the ionic solution include ammonium ions, bicarbonate ions, carbonate ions, and/or carbamate ions. An example of a known chilled ammonia based CO2 removal system is described in WO 2006/022885.

With reference to FIG. 1C, a CO2 absorber 15 is configured to receive a flue gas stream (FG) originating from, for example, the combustion chamber of a fossil fuel fired boiler 5 (see FIG. 1A). It is also configured to receive a lean ionic solution supply from regenerator 11 (see FIG. 1B). The lean ionic solution is introduced into the CO2 absorber 15 via a liquid distribution system 16a while the flue gas stream FG is also received by the CO2 absorber 15 via flue gas inlet 17.

The ionic solution is put into contact with the flue gas stream via a gas-liquid contacting device (hereinafter, mass transfer device, MTD) 18 used for mass transfer and located in the CO2 absorber 15 and within the path that the flue gas stream travels from its entrance via inlet 17 to the CO2 absorber exit 19. The MTD 18 may be, for example, one or more commonly known structured or random packing materials, or a combination thereof.

Once contacted with the flue gas stream in the CO2 absorber 15, the ionic solution acts to absorb CO2 from the flue gas stream, thus making the ionic solution "rich" with CO2 (rich solution). The rich ionic solution continues to flow downward through the MTD 18 and is then collected in the bottom 20 of the CO2 absorber 15. The CO2 removal system 4 may optionally comprise a rich solution buffer tank (not shown) in liquid connection with the CO2 absorber 15 and configured to receive rich solution from the CO2 absorber. Rich solution collected in the CO2 absorber 15 may be cooled and directly recycled via a liquid conduit 21 and a liquid distribution system 16b to the top of the CO2 absorber 15 for use in capturing further CO2 from a gas stream, resulting in a rich ionic solution having a higher concentration of absorbed CO2. At least a portion of the rich solution collected in the CO2 absorber is sent to a regeneration system 11 for regeneration.

In order to convert the rich ionic solution to "lean" ionic solution which is suitable for reuse in the CO2 absorber 15, at least a portion of the rich ionic solution is regenerated by a regeneration system 11 (see FIG. 1B). In the regenerator system, the ionic solution is treated to release the CO2 absorbed from the flue gas stream. The CO2 released from the ionic solution may then be output to storage or other predetermined uses/purposes. Once the CO2 is released from the ionic solution, the ionic solution is said to be "lean". The lean ionic solution is then again ready to absorb CO2 from a flue gas stream and may be directed back to the liquid distribution system 16 whereby it is again introduced into the CO2 absorber 15. The CO2 removal system 4 may optionally comprise a lean solution buffer tank (not shown) in liquid connection with the regenerator system 11 and configured to receive lean solution from the regenerator system.

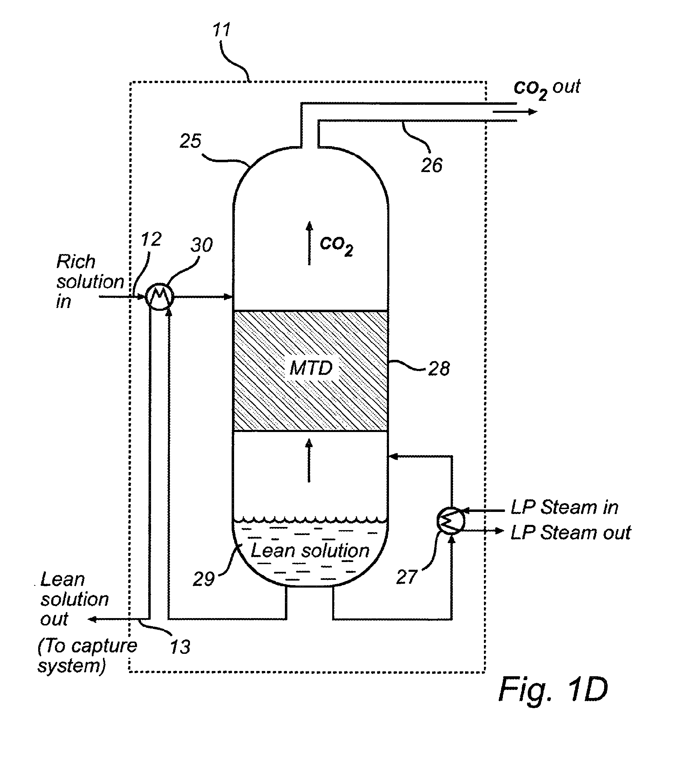

Details of regeneration system 11 are shown in FIG. 1D. System 11 includes a regenerator 25. Regenerator 25 is configured to receive a rich solution feed from the capture system 10 and to return a lean solution feed to the capture system 10 once CO2 has been separated from the rich solution. The separated CO2 leaves the regenerator via a gas exit 26. The regenerator may further comprise a mass transfer device (MTD) 28 which facilitates heat and mass transfer between the rich solution which is fed to the regenerator and the vapor produced in the regenerator, e.g. by means of a re-boiler 27.

During the regeneration process, the rich ionic solution is pressurized and heated so that CO2 contained in the solution separates from the ionic solution. The regeneration process generally comprises raising the pressure in the regenerator 25 to in the range of 2-150 bar, preferably 10-30 bar, and raising the temperature of the ionic solution to in the range of 50-200 °C, preferably 100-150 °C. Under these conditions, nearly all of the CO2 absorbed CO2 is released from the ionic solution into the gas phase. The gas phase may also comprise a minor portion of NH3 (ammonia slip) which may be condensed and returned to the capture system 10 for use in capturing further CO2 from a gas stream. Lean ionic solution is collected in the bottom of the regenerator.

A heat exchanger 30 may be configured to heat the rich ionic solution coming from the CO2 absorber 15 using hot lean ionic solution coming from the regenerator 25.

The CO2 removal system 4 generally comprises a first liquid conduit 12 configured to forward CO2 rich ionic solution from the CO2 absorber 10 to the regenerator 11. The conduit 12 may for example comprise a pipe connecting a rich solution outlet on the CO2 absorber 10 to a liquid inlet of the regenerator. The first liquid conduit 12 may for example comprise a pump implemented to forward the ionic solution. In an embodiment, the first liquid conduit 12 may comprise a high pressure pump implemented to forward the ionic solution into the regenerator, and to increase the pressure inside the regenerator to a predetermined value, for example in the range of 10-30 bar. The first liquid conduit 12 may further comprise a rich solution buffer tank (not shown) configured to hold a volume of ionic solution. In an embodiment, the first liquid conduit 12 may be configured to forward a first portion of rich ionic solution from the CO2 absorber to the regenerator, while a second portion of the rich ionic solution is directly forwarded to the liquid distribution system of the CO2 absorber to absorb more CO2 before being sent to the regenerator.

The CO2 removal system 4 generally comprises a second liquid conduit 13 configured to forward CO2 lean ionic solution from the regenerator 11 to the CO2 absorber 10. The conduit 13 may for example comprise a pipe connecting a lean solution outlet on the regenerator 11 to a liquid distribution system 16 of the CO2 absorber. The second liquid conduit 13 may for example comprise a pump implemented to forward the ionic solution. The first liquid conduit 13 may also comprise one or more heat exchangers or cooling devices configured to reduce the temperature of the ionic solution, for example to a temperature in the range of 0-20 °C, before it is introduced into the CO2 absorber 10. The second liquid conduit 13 may further comprise a lean solution buffer tank (not shown) configured to hold a volume of ionic solution.

In the CO2 removal system 4 (see FIG. 1B), water will typically accumulate in the ionic solution circulating between the capture system 10 and regeneration system 11. This accumulation of water is a consequence of the differences in water (moisture) content between the gas streams fed to the CO2 removal system 4, and the gas streams leaving the CO2 removal system 4. Moisture present in the feed gas stream will typically precipitate in the low temperature absorption process in the CO2 absorber 15. This accumulated water acts to dilute the ionic solution circulating between the capture system 10 and regeneration system 11, thereby reducing the ability of the ionic solution to "capture" CO2 from a flue gas stream.

In order to maintain the effectiveness of the ionic solution as it circulates between the capture system 10 and the regeneration system 11, it is necessary to remove water from the ionic solution that otherwise would accumulate in the system and decrease the absorption capacity of the ionic solution. It is also important that any efforts to separate the water from the ionic solution minimize, if not completely avoid, the loss of ammonia and derivatives thereof from the ionic solution concurrent with the removal of water from the system.

Previously, the amount of water in the circulating ionic solution has been adjusted by, e.g., removing a portion of the ionic solution in a "bleed stream" and by compensating the dilution of the ionic solution by adding fresh ammonia. The ionic solution in the "bleed stream" must then be disposed of and fresh NH3 must be provided, which leads to increased costs.

According to the different aspects described herein, the CO2 removal system 4 is provided with a gas-liquid separating device 40 configured to remove water from the circulating ionic solution, while avoiding loss of ammonia and derivatives thereof from the CO2 removal system 4.

Thus, in an embodiment, schematically illustrated in FIG. 2A, the CO2 removal system 4 comprises a gas-liquid separating device 40 arranged in fluid connection with, and configured to receive a portion of, the circulating ionic solution stream, separate the received ionic solution into an NH3 rich gas phase and an NH3 lean liquid phase, and reintroduce the NH3 rich gas phase into the circulating ionic solution stream. The NH3 lean liquid phase, consisting mainly of water, is removed from the system. Ionic solution may be supplied to the gas-liquid separating device 40 passively, e.g. by means of the internal pressure of the CO2 removal system, or actively, e.g. by means of a pump.

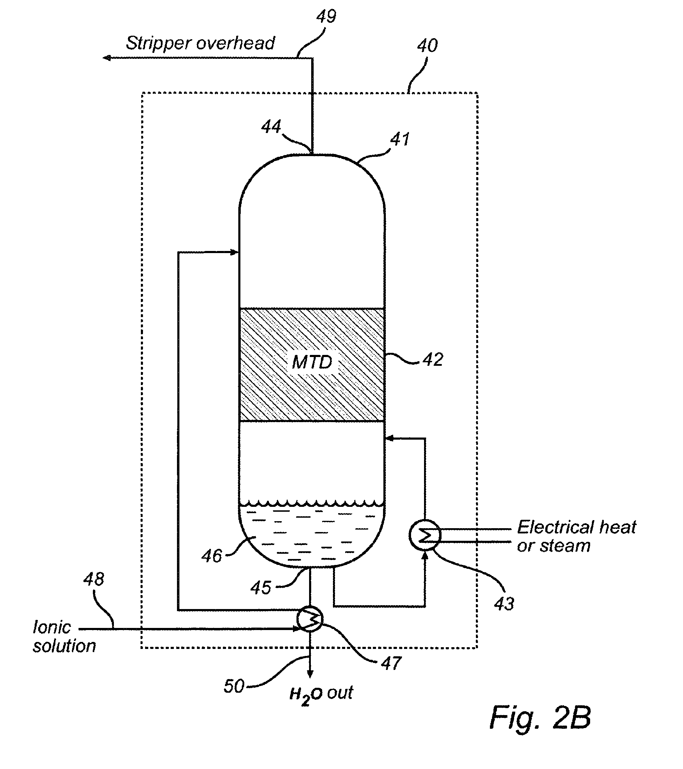

In an embodiment schematically illustrated in FIG. 2B, the gas-liquid separating device 40 comprises a stripper 41. The stripper 41 may be configured as, for example, a generally cylindrical shaped steel vessel configured to operate within a pre-determined pressure range. The stripper 41 is preferably equipped with one or more suitable mass transfer devices (MTD) 42. The MTD may be, for example, valve trays, sieve trays, structured packing, random packing or other suitable packing materials, or a combination thereof. A heating system/device 43 may be provided in the stripper 41 for heating the ionic solution received by the stripper.

The stripper 41 is preferably configured to provide sufficient heat to the ionic solution that low boiling point components, for example NH3 and CO2, are transferred to a gas phase, while high boiling point components, for example water, are collected in a liquid phase at the bottom of the stripper. The ionic solution may be heated up appropriately via, for example, a re-boiler. The re-boiler may be heated using, for example, electrically generated heat or steam or other hot fluids fed from another part of the CO2 removal system 4, e.g. hot flue gas or hot lean solution. Similarly, the re-boiler may be heated via steam fed from a source external to the CO2 removal system 4, such as, for example some source within the power generation system 6 or flue gas cleaning system 1. The heat may be supplied by any heating means capable of providing heat at a temperature above the boiling temperature of water at the operating pressure of the stripper. Since the stripper is generally relatively small in size, it can be heated by any of a number of different methods, including steam in a re-boiler as described above, but also by life steam injection (i.e. injection of steam directly into the bottom of the stripper), by electricity, or by other hot media, such as hot flue gases or hot condensate. If the stripper is heated by life steam injection, the condensed water from the injected steam will be collected together with the liquid phase at the bottom of the stripper. Life steam injection is efficient and saves the re-boiler.

The stripper 41 is configured to discharge the gas phase, containing mainly NH3 and CO2, via a gas exit 44, and the liquid phase, containing mainly water, via a liquid exit 45. The stripper may be arranged to produce a liquid phase at the bottom of the stripper 46 containing less than 5 % NH3 by weight, such as less than 4 %, 3 %, 2 % or 1 % NH3. Preferably, the stripper 41 may be arranged to produce a liquid phase at the bottom of the stripper 46 consisting of essentially pure water.

The liquid phase collected at the bottom of the stripper 46 generally has a temperature in the range of about or slightly below the boiling temperature of water at the relevant pressure, e.g. about 80-100 °C at atmospheric pressure. A heat exchanger 47 may be provided to transfer heat from the liquid phase removed from the bottom of the stripper 46 to the ionic solution received from the circulating ionic solution stream (and thereby raise the temperature of the ionic solution to a predetermined temperature, for example, between 80-100 °C) before it is introduced into the stripper 41.

The portion of ionic solution which is received from the circulating ionic solution may vary within a wide range depending on the need for water removal in a specific CO2 removal system. A suitable portion may be calculated based on, e.g., the water accumulation in a specific CO2 removal system. The portion may also be variable in a system such that variations in, e.g., the moisture content of the incoming gas stream may be compensated.

The portion may for example comprise in a range of 0.01-25 %, such as in a range of 0.01-10 % or 0.01-5 %, of the total mass flow rate of the circulating ionic solution. The smaller the portion of ionic solution which is received, the smaller and less costly the gas-liquid separating device may be used. In specific embodiments, the portion of ionic solution which is received may be in a range of 0.05-1 % of the total mass flow rate of the circulating ionic solution.

The gas-liquid separating device 40 is arranged in fluid connection with the circulating ionic solution stream of the CO2 removal system.

The fluid connection may preferably include at least one fluid connection 48 configured to direct a portion of the circulating ionic solution stream to a liquid inlet of the gas-liquid separating device 40. The fluid connection may comprise a pump and a flow regulating device operable for regulating the amount of ionic solution which is fed to the gas-liquid separating device 40.

The fluid connection may preferably include at least one fluid connection 49 configured to feed the gas phase produced in the gas-liquid separating device 40 from a gas outlet 44 of the gas-liquid separating device 40 into the circulating ionic solution stream of the CO2 removal system 4.

The gas-liquid separating device 40 may preferably include at least one fluid connection 50 configured to remove the liquid phase produced in the gas-liquid separating device 40 via a liquid outlet 45.

Because all of the ionic solution which circulates in the CO2 removal system 4 contains water, ionic solution for the gas-liquid separating device 40 may be received from, and reintroduced into, any position along the ionic solution circulation. Examples of positions along the ionic solution circulation where ionic solution may be received and/or reintroduced, include the CO2 absorber 10, the regenerator 11, the first liquid conduit 12 configured to forward CO2 rich ionic solution from the CO2 absorber to the regenerator, and the second liquid conduit 13 configured to forward CO2 lean ionic solution from the regenerator to the CO2 absorber.

In one embodiment, the ionic solution for the gas-liquid separating device 40 may be received from a CO2 rich portion of the circulating ionic solution stream, for example from the ionic solution collected at the bottom of the CO2 absorber or from the first liquid conduit configured to forward CO2 rich ionic solution from the CO2 absorber to the regenerator.

An advantage of this embodiment is that the rich solution is generally provided at a pressure close to atmospheric pressure, for example at a pressure of less than 2 bar. This means that the gas-liquid separating device 40 and fluid connections 48, 49 do not need to be configured for operation at high pressure. Compared to an embodiment wherein the ionic solution is received at high pressure, it also means that the heat required in order to separate the ionic solution into a liquid phase and a gas phase may be provided at a lower temperature. Therefore, in an embodiment wherein the ionic solution is received at a pressure close to atmospheric pressure, the gas-liquid separating device 40 may for example use low pressure steam or electrical heating for heating the ionic solution in order to separate the ionic solution into a liquid phase and a gas phase.

In one embodiment, the ionic solution for the gas-liquid separating device 40 may be received from a CO2 lean portion of the circulating ionic solution stream, for example from the ionic solution collected at the bottom 29 of the regenerator 25 or from the liquid conduit 13 configured to forward CO2 lean ionic solution from the regenerator to the CO2 absorber 15.

An advantage of this embodiment is that the lean solution is generally provided at a high temperature, such as a temperature in the range of 50-200 °C, since it has undergone heating in the regenerator 25. This means that a relatively low amount of additional heat may be required in order to separate the ionic solution into a liquid phase and a gas phase. The heat may for example be provided by medium pressure steam or by electrical heating.

In an embodiment, the gas phase produced by the gas-liquid separating device 40 is reintroduced into the regenerator or into a liquid conduit configured to forward a solution stream to the regenerator. An advantage of this is that heat transferred to the gas phase in the gas-liquid separating device 40 is used to indirectly reduce the heating requirement of the regenerator 25. In other words, the energy requirement of the gas-liquid separating device 40 may replace a portion of the energy requirement of the regenerator 25. Accordingly, the operation of the gas-liquid separating device 40 can be made essentially energy neutral.

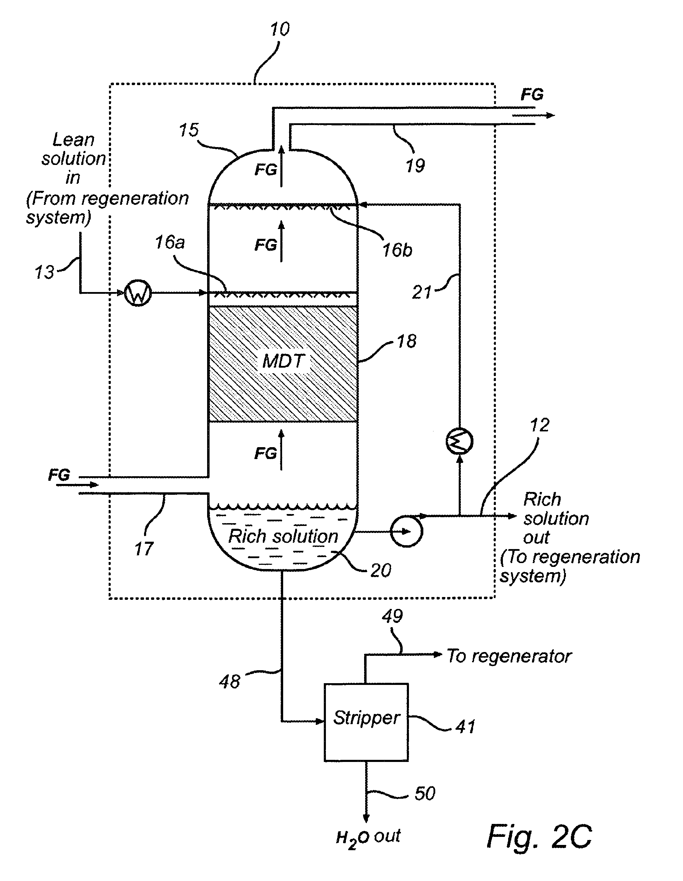

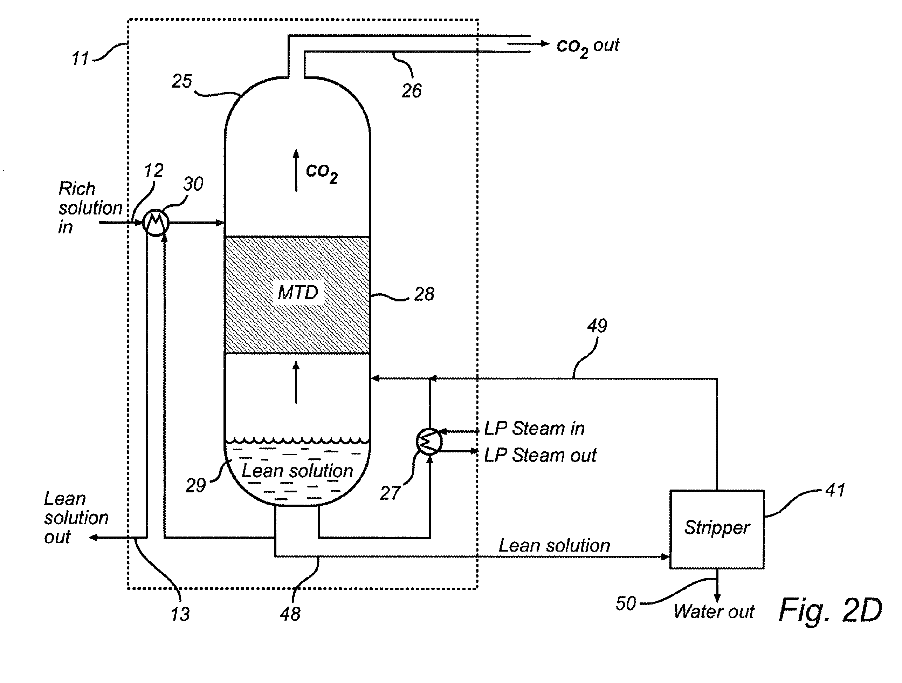

With reference to FIGS. 2C and 2D, a CO2 removal system 4 as described above is proposed that includes a gas-liquid separating device 40 which comprises a stripper 41 configured to remove water from the circulating ionic solution by stripping as described in detail above.

FIG. 2C is a schematic illustration of an embodiment wherein the received ionic solution is rich ionic solution from the bottom 20 of the CO2 absorber 15 and wherein the gas phase is reintroduced into the regenerator 25.

In the embodiment of FIG. 2C, the gas-liquid separating device 40 comprises a stripper 41. The stripper 41 may be configured as, for example, a generally cylindrical shaped steel vessel configured to operate within a pressure range of about 1-5 bar. The stripper 41 is preferably equipped with one or more suitable mass transfer devices (MTD) 42. The MTD may be, for example, valve trays, sieve trays, structured packing, random packing or other suitable packing materials, or a combination thereof. A heating system/device 43 may be provided in the stripper 41 for heating the ionic solution received by the stripper. The heating system could be heated by low pressure steam (typically with a pressure in the range of 4-8 bar), or, if the amount of heat required is too low to justify the infrastructure for low pressure steam, via electrical heating devices/systems. The stripper 41 is preferably configured to provide sufficient heat to the ionic solution so that, at a pressure in the range of 1-5 bar, low boiling point components, for example NH3 and CO2, are transferred to a gas phase, while high boiling point components, for example water, are collected in a liquid phase at the bottom 46 of the stripper 41. The stripper 41 is configured to discharge the gas phase, containing mainly NH3 and CO2, via a gas exit 44, and the liquid phase, containing mainly water, via a liquid exit 45.

The stripper 41 is configured to receive lean ionic solution collected at the bottom of the CO2 absorber 15. The rate at which lean ionic solution from the CO2 absorber 15 is fed (feed rate) to the stripper 41 is, for example, approximately 0.5% to 2.0% of the feed rate at which rich ionic solution is fed to the CO2 absorber 15. The ionic solution received from the CO2 absorber 15 is contacted via a liquid/gas MTD 42, preferably in a countercurrent flow, with upcoming vapors fed to or generated in the bottom of the stripper 41. The difference between equilibrium partial pressure of the ammonia and CO2 in the ionic solution flowing downward within the stripper 41 and the vapor pressures of ammonia and CO2 in the upcoming vapor phase results in the ammonia and CO2 transition from the liquid into the vapor phase. As a result, pure water collects at the bottom 46 of the stripper 41 and may be removed easily there from without drawing off ammonia. The gas phase comprising stripped off ammonia and CO2 and a residual amount of steam leaves the stripper 41 via a gas exit 44 at the top of the stripper.

The liquid phase collected at the bottom 20 of the CO2 absorber 15 generally has a temperature in the range of 10-30 °C. The liquid phase collected at the bottom 46 of the stripper 41 generally has a temperature in the range of 80-100 °C. A heat exchanger 47 may be provided to transfer heat from the liquid phase removed from the bottom of the stripper 41 to the ionic solution received from the CO2 absorber 15 (and thereby raise the temperature of the ionic solution to a predetermined temperature, for example, between 50-80 °C) before it is introduced into the stripper 41.

The gas phase (CO2, NH3, residual water vapor) from the stripper 41 is sent back, either in part or completely, to the regenerator 25. The liquid phase collected at the bottom 46 of the stripper 41 will preferably be water or an aqueous solution low in NH3 and with no CO2. Depending on the residual ammonia content in the water, the water may be sent to a wash water stripper or directly to battery limits (BL). In this embodiment the invested heat is substantially, if not completely, recovered in the regenerator vessel 25 and/or in the small feed/effluent heat exchanger 47. The heating requirement of the regenerator 25, generally provided for by low pressure (4-8 bar) steam, could thus be reduced.

FIG. 2D is a schematic illustration of an embodiment wherein the received ionic solution is lean ionic solution from the bottom 29 of the regenerator 25 and wherein the formed gas phase is reintroduced into the regenerator 25.

In the embodiment of FIG. 2D, the gas-liquid separating device 40 comprises a stripper 41. The stripper 41 may be configured as, for example, a generally cylindrical shaped steel vessel configured to operate within a pressure range of about 10-30 bar. The stripper 41 is preferably equipped with one or more suitable mass transfer devices (MTD) 42. The MTD may be, for example, valve trays, sieve trays, structured packing, random packing or other suitable packing materials, or a combination thereof. A heating system/device 43 may be provided in the stripper 41 for heating the ionic solution received by the stripper. The heating system could be heated by medium pressure steam (typically with a pressure in the range of 10-30 bar), or, if the amount of heat required is too low to justify the infrastructure for medium pressure steam, via electrical heating devices/systems. The stripper 41 is preferably configured to provide sufficient heat to the ionic solution so that, at a pressure in the range of 10-30 bar, low boiling point components, for example NH3 and CO2, are transferred to a gas phase, while high boiling point components, for example water, are collected in a liquid phase at the bottom of the stripper. The stripper 41 is configured to discharge the gas phase, containing mainly NH3 and CO2, via a gas exit 44, and the liquid phase, containing mainly water, via a liquid exit 45.

The stripper 41 is configured to receive lean ionic solution from the regenerator 25. The rate at which lean ionic solution from the regenerator 25 is fed (feed rate) to the stripper 41 is, for example, approximately 0.5% to 2.0% of the feed rate at which rich ionic solution is fed to the regenerator 25. The ionic solution received from the regenerator 25 is contacted via a liquid/gas MTD 42, preferably in a countercurrent flow, with upcoming vapors (upcoming vapors should be sufficient) fed to or generated in the bottom 46 of the stripper vessel 41. The difference between equilibrium partial pressure of the ammonia and CO2 in the ionic solution flowing downward within the appendix stripper vessel 41 and the vapor pressures of ammonia and CO2 in the upcoming vapor phase results in the ammonia and CO2 transition from the liquid into the vapor phase. As a result, pure water collects at the bottom of the stripper 41 and may be removed easily there from without drawing off ammonia. The gas phase comprising stripped off ammonia and CO2 and a residual amount of steam leaves the stripper via a gas exit 44 at the top of the stripper.

The liquid phase collected at the bottom 29 of the regenerator 25 generally has a temperature in the range of 100-150 °C. The liquid phase collected at the bottom 46 of the stripper 41 generally has a temperature in the range of 150-250 °C. A heat exchanger 47 may be provided to transfer heat from the liquid phase removed from the bottom of the stripper 41 to the ionic solution received from the regenerator 25 (and thereby raise the temperature of the ionic solution to a predetermined temperature, for example, between 150-200 °C) before it is introduced into the stripper 41.

The gas phase (CO2, NH3, residual water vapor) from the stripper 41 is sent back, either in part or completely, to the regenerator 25. The liquid phase collected at the bottom 46 of the stripper 41 will preferably be water or an aqueous solution low in NH3 and with no CO2. Depending on the residual ammonia content in the water, the water may be sent to a wash water stripper or directly to battery limits (BL). In this embodiment the invested heat is substantially, if not completely, recovered in the regenerator vessel 25 and/or in the small feed/effluent heat exchanger 47. The heating requirement of the regenerator, generally provided for by low pressure (4-8 bar) steam, could thus be reduced.

The CO2 removal system further comprises a water wash system operative for removing trace amounts of NH3 present in the gas stream leaving the CO2 absorber. An example of a water wash system is schematically illustrated in FIG. 3. The water wash system 60 generally comprises an absorber 61 (referred to herein as the NH3 absorber) and a stripper 62 (referred to herein as the NH3 stripper). During the water wash process, a stream of water or an aqueous solution having a concentration of NH3 of less than 5 % by weight is circulated between the NH3 absorber 61 and the NH3 stripper 62.

In the NH3 absorber 61 a gas stream depleted in CO2 from the CO2 absorber 15 is brought into contact with the stream of water or an aqueous solution having a concentration of NH3 of less than 5 % by weight such that NH3 is absorbed in said stream of water or aqueous solution. At least a portion of the water or aqueous solution used in the NH3 absorber is withdrawn and fed to the NH3 stripper 62. In the NH3 stripper 62, a gaseous phase comprising NH3 is separated from the water or aqueous solution and removed from the water wash system. In addition to NH3, the gaseous phase from the NH3 stripper 62 may also contain water vapor, CO2 and other low-boiling contaminants. The separated gaseous phase comprising NH3 may be returned to the ionic solution of the CO2 removal system, e.g. to the regenerator 25, to minimize the loss of NH3 from the system. The water or aqueous solution from which NH3 has been separated is recycled to the NH3 absorber 61 for use in capturing further NH3 from a gas stream.

As described above, the CO2 removal system 4 further comprises a water wash system 60 operative for removing trace amounts of NH3 present in the gas stream leaving the CO2 absorber. In embodiments, the stripper 41 may be integrated with the water wash system 60, such that an NH3 rich stream from the water wash system may be directed to the stripper 41 and an NH3 lean stream from the stripper 41 may be directed to the water wash system 60.

In an embodiment depicted in FIG. 3, the liquid phase collected at the bottom of the stripper 41, i.e. water or an aqueous solution low in NH3 and with no CO2, may be forwarded, either in part or completely, to the water wash system 60 for use in absorbing NH3 from the gas stream.

In embodiments, the stripper may be further configured to receive other small ammonia rich streams that are generated by the CO2 removal system. For example, in an embodiment further comprising a water wash system 60 operative for removing trace amounts of NH3 present in the gas stream leaving the CO2 absorber, the stripper 41 can be further configured to receive the reflux from the water wash stripper 62. This arrangement provides the further advantage of a suitable destination for recycling NH3 which has left the circulating stream of ionic solution via the treated gas stream.

In a further embodiment described generally in FIG. 3, the water wash system 60 comprises a condenser 63 configured to receive the gas stream produced by the water wash stripper 62, and condense water vapor contained therein. The aqueous condensate, also containing NH3, collected in the condenser 63 is forwarded to the top of the stripper 41 together with the ionic solution coming from the circulating ionic solution. Also from this stream, the water may be recovered as pure water at the bottom of the stripper 41 and the ammonia and CO2 contained in the condensate may be recycled to the regenerator 25.

The use of the stripper 41 provides the advantages of:
- Directing ammonia that would otherwise be lost from the system directly back to the regeneration system/vessel.
- Allowing efficient recovery of heat used in the stripping process. As the recovered ammonia is transferred back to the regeneration system/vessel in hot vaporized form, the heat consumed during the stripping process is recovered and used efficiently in carrying out the regeneration of the CO2 capture process(es), replacing the corresponding portion of heating demand there.
- Allowing a more effective control of the system water balance.

It should be emphasized that the above-described embodiments of the present invention, particularly, any "preferred" embodiments, are merely possible examples of implementations, merely set forth for a clear understanding of the principles of the invention.

## Claims

1. A system for removing carbon dioxide (CO2) from a gas stream by bringing the gas stream into contact with a circulating ionic ammonia solution stream such that CO2 is absorbed in said ionic ammonia solution, said system comprising:
a capture system (10) comprising a CO2 absorber configured to receive a gas stream containing CO2 and to bring the gas stream into contact with a stream of an ionic ammonia solution to form a stream of CO2 rich ionic ammonia solution and a gas stream depleted of CO2;
a water wash system (60) operative for removing trace amounts of ammonia present in the gas stream depleted of CO2, the water wash system (60) comprising an absorber (61) wherein the gas stream depleted in CO2 is brought into contact with a stream of water or an aqueous solution such that ammonia is absorbed in said stream of water or aqueous solution, and a stripper (62) wherein ammonia is separated from the water or aqueous solution, and wherein said stream of water or aqueous solution is recirculated between said absorber (61) and said stripper (62);
a regeneration system (11) comprising a regenerator configured to receive a stream of CO2 rich ionic ammonia solution from the CO2 absorber, and to separate CO2 from the ionic ammonia solution to form a stream of CO2 lean ionic ammonia solution, and to return said stream of CO2 lean ionic ammonia solution to the CO2 absorber;
**characterized in that** the system comprises a gas-liquid separating device (40) configured to receive a portion of the circulating ionic ammonia solution stream, separate the received ionic ammonia solution into an ammonia rich gas phase and an ammonia lean liquid phase, and reintroduce the ammonia rich gas phase into the regenerator or into an ionic ammonia solution stream directed towards the regenerator.

2. System according to claim 1, wherein the gas-liquid separating device is configured to receive CO2 lean ionic ammonia solution from the circulating ionic ammonia solution stream.

3. System according to claim 2, wherein the gas-liquid separating device is configured to receive CO2 lean ionic ammonia solution from the regenerator.

4. System according to claim 1, wherein the gas-liquid separating device is configured to receive CO2 rich ionic ammonia solution from the circulating ionic ammonia solution stream.

5. System according to claim 4, wherein the gas-liquid separating device is configured to receive CO2 rich ionic ammonia solution from the CO2 absorber.

6. System according to any one of the preceding claims, comprising a high pressure pump configured to increase the pressure of the ionic ammonia solution in the regenerator to 2-150 bar, preferably 10-30 bar.

7. System according to any one of the preceding claims, wherein the gas-liquid separating device comprises a stripper.

8. System according to claim 7, wherein the stripper is configured to be heated by steam or by electric heating means.

9. System according to any one of claims 7-8, comprising a heat exchanger configured to heat the received portion of the circulating ionic ammonia solution stream using the ammonia lean liquid phase.

10. System according to any one of the preceding claims, wherein:
the absorber (61) is configured to bring the gas stream depleted in CO2 into contact with a stream of water or an aqueous solution having a concentration of ammonia of less than 5 % by weight.

11. System according to any one of the preceding claims, wherein the absorber (61) is configured to receive at least a portion of the ammonia lean liquid phase from the gas-liquid separating device.

12. Method for removing carbon dioxide (CO2) from a gas stream by bringing the gas stream into contact with a circulating ionic ammonia solution stream such that CO2 is absorbed in said ionic ammonia solution, said method comprising the steps:
a) bringing a stream of an ionic ammonia solution into contact with a gas stream containing CO2 in a CO2 absorber, to form a CO2 rich stream of ionic ammonia solution and a gas stream depleted of CO2,
b) removing trace amounts of ammonia present in the gas stream depleted of CO2 by washing the gas stream depleted in CO2 with a stream of water or an aqueous solution in an absorber (61) such that ammonia is absorbed in said stream of water or aqueous solution,
c) separating ammonia from the water or aqueous solution in a stripper (62) and recycling a stream of water or aqueous solution having a concentration of ammonia of less than 5% by weight to the absorber (62),
d) removing at least a portion of the CO2 from the CO2 rich stream of ionic ammonia solution of step a) in a regenerator, to form a CO2 lean stream of ionic ammonia solution, and
e) recycling at least a portion of the CO2 lean ionic ammonia solution formed in step d) to step a), and being **characterized by** the step of
f) reducing the water content of the circulating stream of ionic ammonia solution by withdrawing a portion of the circulating ionic ammonia solution stream, separating the withdrawn ionic ammonia solution into an ammonia rich gas phase and an ammonia lean liquid phase, and reintroducing the ammonia rich gas phase into the regenerator or into an ionic ammonia solution stream directed towards the regenerator.

13. Method according to claim 12, wherein the portion of ionic ammonia solution which is withdrawn in step f) is in the range of 0.01-25 % by volume of the total volume of circulating ionic ammonia solution stream.

14. Method according to any one of claims 12-13, wherein the ammonia lean liquid phase in step f) comprises an aqueous solution containing less than 5 % by weight of ammonia.

15. Method according to any one of claims 12-14, wherein the ionic ammonia solution which is withdrawn in step f) is CO2 rich ionic ammonia solution.

16. Method according to any one of claims 12-14, wherein the ionic ammonia solution which is withdrawn in step f) is CO2 lean ionic ammonia solution.

17. Method according to any one of claims 12-16, wherein the ammonia lean liquid phase in step f) is removed from the circulating stream of ionic ammonia solution.

18. Method according to any one of claims 12-17, wherein step f) is performed in a stripper.

19. Method according to claim 18, wherein the stripper is heated by steam or by electric heating means.

20. Method according to any one of claims 12-19, further comprising:
pressurizing the ionic ammonia solution in the regenerator to a pressure in the range of 2-150 bar with a high pressure pump.

## Patentansprüche

1. System zur Abtrennung von Kohlendioxid (CO2) aus einem Gasstrom durch Inkontaktbringen des Gasstroms mit einem Ionische-Ammoniaklösung-Kreisstrom, so dass CO2 in der ionischen Ammoniaklösung absorbiert wird, wobei das System Folgendes umfasst:
ein Einfangsystem (10), umfassend einen CO2-Absorber, der so konfiguriert ist, dass er einen CO2-haltigen Gasstrom erhält und den Gasstrom in Kontakt mit einem Strom einer ionischen Ammoniaklösung bringt, wobei ein Strom von CO2-reicher ionischer Ammoniaklösung und ein an CO2 verarmter Gasstrom gebildet werden;
ein Wasserwaschsystem (60), das zur Abtrennung von im an CO2 verarmten Gasstrom vorhandenen Ammoniakspuren betrieben wird, wobei das Wasserwaschsystem (60) einen Absorber (61), wobei der an CO2 verarmte Gasstrom mit einem Strom von Wasser oder einer wässrigen Lösung in Kontakt gebracht wird, so dass Ammoniak in dem Strom von Wasser bzw. wässriger Lösung absorbiert wird, und einen Stripper (62), wobei Ammoniak von dem Wasser bzw. der wässrigen Lösung getrennt wird, umfasst und wobei der Strom von Wasser bzw. wässriger Lösung im Kreislauf zwischen dem Absorber (61) und dem Stripper (62) geführt wird;
ein Regenerationssystem (11), umfassend einen Regenerator, der so konfiguriert ist, dass er einen Strom von CO2-reicher ionischer Ammoniaklösung von dem CO2-Absorber erhält und CO2 von der ionischen Ammoniaklösung trennt, wobei ein Strom von CO2-magerer ionischer Ammoniaklösung gebildet wird, und den Strom von CO2-magerer ionischer Ammoniaklösung an den CO2-Absorber zurückschickt;
**dadurch gekennzeichnet, dass** das System eine Gas-Flüssigkeit-Trennvorrichtung (40) umfasst, die so konfiguriert ist, dass sie einen Teil des Ionische-Ammoniaklösung-Kreisstroms erhält, die aufgenommene Ionische-Ammoniaklösung in eine ammoniakreiche Gasphase und eine ammoniakmagere Flüssigphase trennt und die ammoniakreiche Gasphase wieder in den Regenerator oder in einen zum Regenerator geleiteten Ionische-Ammoniaklösungsstrom einführt.

2. System nach Anspruch 1, wobei die Gas-Flüssigkeit-Trennvorrichtung so konfiguriert ist, dass sie CO2-magere ionische Ammoniaklösung von dem Ionische-Ammoniaklösung-Kreisstrom erhält.

3. System nach Anspruch 2, wobei die Gas-Flüssigkeit-Trennvorrichtung so konfiguriert ist, dass sie CO2-magere ionische Ammoniaklösung von dem Regenerator erhält.

4. System nach Anspruch 1, wobei die Gas-Flüssigkeit-Trennvorrichtung so konfiguriert ist, dass sie CO2-reiche ionische Ammoniaklösung von dem Ionische-Ammoniaklösung-Kreisstrom erhält.

5. System nach Anspruch 4, wobei die Gas-Flüssigkeit-Trennvorrichtung so konfiguriert ist, dass sie CO2-reiche ionische Ammoniaklösung von dem CO2-Absorber erhält.

6. System nach einem der vorhergehenden Ansprüche, umfassend eine Hochdruckpumpe, die so konfiguriert ist, dass sie den Druck der ionischen Ammoniaklösung im Regenerator auf 2-150 bar, vorzugsweise 10-30 bar, erhöht.

7. System nach einem der vorhergehenden Ansprüche, wobei die Gas-Flüssigkeit-Trennvorrichtung einen Stripper umfasst.

8. System nach Anspruch 7, wobei der Stripper so konfiguriert ist, dass er mit Dampf oder elektrisch beheizt wird.

9. System nach einem der Ansprüche 7-8, umfassend einen Wärmetauscher, der so konfiguriert ist, dass er den erhaltenen Anteil des Ionische-Ammoniaklösung-Kreisstroms unter Verwendung der ammoniakmageren Flüssigphase erwärmt.

10. System nach einem der vorhergehenden Ansprüche, wobei:
der Absorber (61) so konfiguriert ist, dass er den an CO2 verarmten Gasstrom mit einem Strom von Wasser oder einer wässrigen Lösung mit einer Ammoniakkonzentration von weniger als 5 Gew.-% in Kontakt bringt.

11. System nach einem der vorhergehenden Ansprüche, wobei der Absorber (61) so konfiguriert ist, dass er wenigstens einen Teil der ammoniakmageren Flüssigphase von der Gas-Flüssigkeit-Trennvorrichtung erhält.

12. Verfahren zur Abtrennung von Kohlendioxid (CO2) aus einem Gasstrom durch Inkontaktbringen des Gasstroms mit einem Ionische-Ammoniaklösung-Kreisstrom, so dass CO2 in der ionischen Ammoniaklösung absorbiert wird, wobei das Verfahren die folgenden Schritte umfasst:
a) Inkontaktbringen eines Stroms einer ionischen Ammoniaklösung mit einem CO2-haltigen Gasstrom in einem CO2-Absorber, wobei ein CO2-reicher Strom von ionischer Ammoniaklösung und ein an CO2 verarmter Gasstrom gebildet werden,
b) Abtrennen von im an CO2 verarmten Gasstrom vorhandenen Ammoniakspuren durch Waschen des an CO2 verarmten Gasstroms mit einem Strom von Wasser oder einer wässrigen Lösung in einem Absorber (61), so dass Ammoniak in dem Strom von Wasser bzw. wässriger Lösung absorbiert wird,
c) Trennen von Ammoniak von dem Wasser bzw. der wässrigen Lösung in einem Stripper (62) und Rückführen eines Stroms von Wasser bzw. wässriger Lösung mit einer Ammoniakkonzentration von weniger als 5 Gew.-% zum Absorber (62),
d) Abtrennen wenigstens eines Teils des CO2 von dem CO2-reichen Strom von ionischer Ammoniaklösung aus Schritt a) in einem Regenerator, wobei ein CO2-magerer Strom von ionischer Ammoniaklösung gebildet wird, und
e) Rückführen wenigstens eines Teils der in Schritt d) gebildeten CO2-mageren ionischen Ammoniaklösung zu Schritt a), wobei dies **gekennzeichnet ist durch** Schritt
f) Verringern des Wassergehalts des Ionische-Ammoniaklösung-Kreisstroms **durch** Abziehen eines Teils des Ionische-Ammoniaklösung-Kreisstroms, Trennen der abgezogenen ionischen Ammoniaklösung in eine ammoniakreiche Gasphase und eine ammoniakmagere Flüssigphase und Wiedereinführen der ammoniakreichen Gasphase in den Regenerator oder in einen zum Regenerator geleiteten Ionische-Ammoniaklösungsstrom.

13. Verfahren nach Anspruch 12, wobei der in Schritt f) abgezogene Anteil der ionischen Ammonaklösung im Bereich von 0,01-25 Vol.-% des Gesamtvolumens des Ionische-Ammoniaklösung-Kreisstroms liegt.

14. Verfahren nach einem der Ansprüche 12-13, wobei die ammoniakmagere Flüssigphase in Schritt f) eine wässrige Lösung mit weniger als 5 Gew.-% Ammoniak umfasst.

15. Verfahren nach einem der Ansprüche 12-14, wobei es sich bei der in Schritt f) abgezogenen ionischen Ammoniaklösung um CO2-reiche ionische Ammoniaklösung handelt.

16. Verfahren nach einem der Ansprüche 12-14, wobei es sich bei der in Schritt f) abgezogenen ionischen Ammoniaklösung um CO2-magere ionische Ammoniaklösung handelt.

17. Verfahren nach einem der Ansprüche 12-16, wobei die ammoniakmagere Flüssigphase in Schritt f) von dem Ionische-Ammoniaklösung-Kreisstrom abgezogen wird.

18. Verfahren nach einem der Ansprüche 12-17, wobei Schritt f) in einem Stripper erfolgt.

19. Verfahren nach Anspruch 18, wobei der Stripper mit Dampf oder elektrisch beheizt wird.

20. Verfahren nach einem der Ansprüche 12-19, bei dem man ferner:
die ionische Ammoniaklösung im Regenerator mit einer Hochdruckpumpe mit einem Druck im Bereich von 2-150 bar beaufschlagt.

## Revendications

1. Système permettant d'éliminer le dioxyde de carbone (CO₂) d'un courant gazeux en amenant le courant gazeux en contact avec un courant de solution d'ammoniaque ionique en circulation de telle sorte que le CO₂ soit absorbé dans ladite solution d'ammoniaque ionique, ledit système comprenant :
un système de capture (10) comprenant un absorbeur de CO₂ configuré pour recevoir un courant gazeux contenant CO₂ et amener le courant gazeux en contact avec un courant d'une solution d'ammoniaque ionique pour former un courant de solution d'ammoniaque ionique riche en CO₂ et un courant gazeux appauvri en CO₂ ;
un système de lavage à l'eau (60) dont le fonctionnement permet d'éliminer les traces d'ammoniac présentes dans le courant gazeux appauvri en CO₂, le système de lavage à l'eau (60) comprenant un absorbeur (61) dans lequel le courant gazeux appauvri en CO₂ est amené en contact avec un courant d'eau ou d'une solution aqueuse de telle sorte que l'ammoniac soit absorbé dans ledit courant d'eau ou de solution aqueuse, et un dispositif de stripage (62) dans lequel l'ammoniac est séparé de l'eau ou de la solution aqueuse, et dans lequel ledit courant d'eau ou de solution aqueuse est remis en circulation entre ledit absorbeur (61) et ledit dispositif de stripage (62) ;
un système de régénération (11) comprenant un régénérateur configuré pour recevoir un courant de solution d'ammoniaque ionique riche en CO₂ en provenance de l'absorbeur de CO₂, et séparer le CO₂ de la solution d'ammoniaque ionique pour former un courant de solution d'ammoniaque ionique pauvre en CO₂, et renvoyer ledit courant de solution d'ammoniaque ionique pauvre en CO₂ vers l'absorbeur de CO₂ ;
**caractérisé en ce que** le système comprend un dispositif de séparation gaz-liquide (40) configuré pour recevoir une partie du courant de solution d'ammoniaque ionique en circulation, séparer la solution d'ammoniaque ionique reçue en une phase gazeuse riche en ammoniac et une phase liquide pauvre en ammoniac, et réintroduire la phase gazeuse riche en ammoniac dans le régénérateur ou dans un courant de solution d'ammoniaque ionique dirigé vers le régénérateur.

2. Système selon la revendication 1, dans lequel le dispositif de séparation gaz-liquide est configuré pour recevoir une solution d'ammoniaque ionique pauvre en CO₂ en provenance du courant de solution d'ammoniaque ionique en circulation.

3. Système selon la revendication 2, dans lequel le dispositif de séparation gaz-liquide est configuré pour recevoir une solution d'ammoniaque ionique pauvre en CO₂ en provenance du régénérateur.

4. Système selon la revendication 1, dans lequel le dispositif de séparation gaz-liquide est configuré pour recevoir une solution d'ammoniaque ionique riche en CO₂ en provenance du courant de solution d'ammoniaque ionique en circulation.

5. Système selon la revendication 4, dans lequel le dispositif de séparation gaz-liquide est configuré pour recevoir une solution d'ammoniaque ionique riche en CO₂ en provenance de l'absorbeur de CO₂.

6. Système selon l'une quelconque des revendications précédentes, comprenant une pompe haute pression configurée pour augmenter la pression de la solution d'ammoniaque ionique dans le régénérateur à 2-150 bars, de préférence à 10-30 bars.

7. Système selon l'une quelconque des revendications précédentes, dans lequel le dispositif de séparation gaz-liquide comprend un dispositif de stripage.

8. Système selon la revendication 7, dans lequel le dispositif de stripage est configuré pour être chauffé par de la vapeur d'eau ou par un dispositif de chauffage électrique.

9. Système selon l'une quelconque des revendications 7-8, comprenant un échangeur de chaleur configuré pour chauffer la partie reçue du courant de solution d'ammoniaque ionique en circulation en utilisant la phase liquide pauvre en ammoniac.

10. Système selon l'une quelconque des revendications précédentes, dans lequel l'absorbeur (61) est configuré pour amener le courant gazeux appauvri en CO₂ en contact avec un courant d'eau ou d'une solution aqueuse ayant une concentration d'ammoniac inférieure à 5 % en poids.

11. Système selon l'une quelconque des revendications précédentes, dans lequel l'absorbeur (61) est configuré pour recevoir au moins une partie de la phase liquide pauvre en ammoniac en provenance du dispositif de séparation gaz-liquide.

12. Procédé permettant d'éliminer le dioxyde de carbone (CO₂) d'un courant gazeux en amenant le courant gazeux en contact avec un courant de solution d'ammoniaque ionique en circulation de telle sorte que le CO₂ soit absorbé dans ladite solution d'ammoniaque ionique, ledit procédé comprenant les étapes consistant à :
a) amener un courant d'une solution d'ammoniaque ionique en contact avec un courant gazeux contenant CO₂ dans un absorbeur de CO₂, pour former un courant de solution d'ammoniaque ionique riche en CO₂ et un courant gazeux appauvri en CO₂,
b) éliminer les traces d'ammoniac présentes dans le courant gazeux appauvri en CO₂ en lavant le courant gazeux appauvri en CO₂ avec un courant d'eau ou d'une solution aqueuse dans un absorbeur (61) de telle sorte que l'ammoniac soit absorbé dans ledit courant d'eau ou de solution aqueuse,
c) séparer l'ammoniac de l'eau ou de la solution aqueuse dans un dispositif de stripage (62) et recycler un courant d'eau ou de solution aqueuse ayant une concentration d'ammoniac inférieure à 5% en poids vers l'absorbeur (62),
d) éliminer au moins une partie du CO₂ dans le courant de solution d'ammoniaque ionique riche en CO₂ de l'étape a) dans un régénérateur, pour former un courant de solution d'ammoniaque ionique pauvre en CO₂, et
e) recycler au moins une partie de la solution d'ammoniaque ionique pauvre en CO₂ formée dans l'étape d) vers l'étape a), et étant **caractérisé par** l'étape consistant à
f) réduire la teneur en eau du courant de solution d'ammoniaque ionique en circulation en soutirant une partie du courant de solution d'ammoniaque ionique en circulation, séparer la solution d'ammoniaque ionique soutirée en une phase gazeuse riche en ammoniac et une phase liquide pauvre en ammoniac, et réintroduire la phase gazeuse riche en ammoniac dans le régénérateur ou dans un courant de solution d'ammoniaque ionique dirigé vers le régénérateur.

13. Procédé selon la revendication 12, dans lequel la partie de la solution d'ammoniaque ionique qui est soutirée dans l'étape f) représente dans la fourchette de 0,01-25 % en volume du volume total de courant de solution d'ammoniaque ionique en circulation.

14. Procédé selon l'une quelconque des revendications 12-13, dans lequel la phase liquide pauvre en ammoniac dans l'étape f) comprend une solution aqueuse contenant moins de 5 % en poids d'ammoniac.

15. Procédé selon l'une quelconque des revendications 12-14, dans lequel la solution d'ammoniaque ionique qui est soutirée dans l'étape f) est une solution d'ammoniaque ionique riche en CO₂.

16. Procédé selon l'une quelconque des revendications 12-14, dans lequel la solution d'ammoniaque ionique qui est soutirée dans l'étape f) est une solution d'ammoniaque ionique pauvre en CO₂.

17. Procédé selon l'une quelconque des revendications 12-16, dans lequel la phase liquide pauvre en ammoniac dans l'étape f) est éliminée du courant de solution d'ammoniaque ionique en circulation.

18. Procédé selon l'une quelconque des revendications 12-17, dans lequel l'étape f) est réalisée dans un dispositif de stripage.

19. Procédé selon la revendication 18, dans lequel le dispositif de stripage est chauffé par de la vapeur d'eau ou par un dispositif de chauffage électrique.

20. Procédé selon l'une quelconque des revendications 12-19, comprenant en outre :
la pressurisation de la solution d'ammoniaque ionique dans le régénérateur à une pression dans la fourchette de 2-150 bars avec une pompe haute pression.
